# EUROPÄISCHE PATENTANMELDUNG

(11) **EP 4 749 152 A1**
(43) Veröffentlichungstag der Anmeldung: **27.05.2026**
(21) Anmeldenummer: 25211251.1
(22) Anmeldetag: 27.10.2025
(51) Int. Cl.: F16D 65/00

(54) **VERFAHREN FÜR EIN BREMSSTAUBABSAUGUNGSSYSTEM ZUM ABSAUGEN VON BREMSSTAUBPARTIKELN SOWIE BREMSSTAUBABSAUGUNGSSYSTEM UND FAHRZEUG DAMIT**

(30) Priorität: 20.11.2024 DE 102024134102
(71) Anmelder: ZF CV Systems Europe BV, 1170 Brüssel (BE)
(72) Erfinder: GRIG, Artem, 68219 Mannheim (DE)
(74) Vertreter: Rabe, Dirk-Heinrich

(57) **Zusammenfassung**

Die Erfindung betrifft ein Verfahren (99) für ein Bremsstaubabsaugungssystem (10) mit einer Absaugvorrichtung (40) zum Absaugen von Bremsstaub (36) einer Bremsanordnung (16), die im Bereich eines Rades (12) eines Fahrzeugs (14) angeordnet ist, wobei die Bremsanordnung (16) eine Bremsscheibe (18) oder Bremstrommel, mindestens einen Bremsbelag (32) und einen Bremsaktuator (33) zum Bewegen des Bremsbelags (32) relativ zur Bremsscheibe (18) oder Bremstrommel umfasst. Das Bremsstaubabsaugungssystem (10) oder die Bremsanordnung (16) umfassen einen Sensor (52) zum Erfassen der Bewegung des Bremsaktuators (33), wobei mit einem Steuergerät (38) elektrische Signale (56) von dem Sensor (52) erfasst werden und in Abhängigkeit von den elektrischen Signalen (56) die Absaugvorrichtung (40), insbesondere ein Gebläse (42) der Absaugvorrichtung (40), angesteuert wird.

Die Erfindung betrifft ferner ein Steuergerät (38) für ein Bremsstaubabsaugungssystem (10) mit einer Absaugvorrichtung (40) zum Absaugen von Bremsstaub (36), ein Bremsstaubabsaugungssystem (10) zur Absaugung von Bremsstaub (36) einer Bremsanordnung (16) und ein Fahrzeug (14) mit einem Bremsstaubabsaugungssystem (10).

## Beschreibung

Die Erfindung betrifft den Bereich der Fahrzeuge und hierbei sowohl Personenkraftwagen, kurz PKW, als auch Nutzfahrzeuge, wie Zugfahrzeuge und durch Zugfahrzeuge ziehbare Anhängerfahrzeuge. Zugfahrzeuge umfassen beispielsweise Sattelschlepper oder landwirtschaftliche Zugmaschinen und Anhängerfahrzeuge umfassen beispielsweise Sattelauflieger.

Aus dem Stand der Technik sind Bremsanlagen von Fahrzeugen, wie Nutzfahrzeugen oder Personenkraftwagen, hinlänglich bekannt. Bremsanlagen eines Fahrzeugs umfassen üblicherweise einen Bremskolben pro Rad des Fahrzeugs, der bei Betätigung, beispielsweise durch ein Bremspedal, einen oder mehrere mit einem Bremskolben verbundene Bremsbeläge an eine Bremsscheibe des jeweiligen Rades drückt, um eine Bremswirkung zu erzeugen. Statt einer Bremsscheibe bei einer Scheibenbremse, kann auch eine Bremstrommel bei einer Trommelbremse vorgesehen sein. Die Bremsbeläge werden dann gegen die Bremstrommel, insbesondere einen Bremsring der Bremstrommel, gedrückt, wobei die Betätigung ebenfalls durch einen Bremskolben aber auch durch eine Nockenwelle, die auch Bremsschlüssel genannt wird, ausgeführt werden kann.

Bremskolben einer Bremsanlage werden zum Bereitstellen einer Betriebsbremsfunktion mit einem Fluid betrieben, wobei mit dem Fluid ein Druck in einer Druckkammer des Bremskolbens, nämlich in einem Bremszylinder des Bremskolbens, erhöht oder verringert wird. Der Begriff Bremskolben wird hier synonym für eine Kolben-Zylinder-Anordnung verwendet. Das Fluid ist beispielsweise ein Gas, nämlich Druckluft, oder eine Flüssigkeit, nämlich eine Bremsflüssigkeit oder eine Hydraulikflüssigkeit. Insbesondere bei Nutzfahrzeugen werden die Bremskolben häufig durch Druckluft betrieben.

Zunehmend halten aber auch elektromechanische Bremsaktuatoren Einzug in Fahrzeugsysteme, die einen Motor zum Betätigen eines Bremskolbens umfassen, der durch den Motor ebenso wie bei einer fluidbetriebenen Bremsanlage, die mit dem Bremskolben verbundenen Bremsbeläge an eine Bremsscheibe drückt oder von diesen wegführt.

All diesen Bremsanlagen gemeinsam ist, dass beim Kontakt zwischen Bremsbelag und Bremsscheibe, insbesondere während einer Relativbewegung zwischen Bremsbelag und Bremsscheibe, die gleichförmig mit dem jeweils zugeordneten Rad dreht, Reibung und somit Verschleiß auftritt. Die Bremsscheiben, die üblicherweise mit einem überwiegenden Anteil aus Eisen oder Stahl gefertigt sind, sind hier weniger betroffen als die Bremsbeläge, die auch Bremsklötze genannt werden und je nach Hersteller oder Einsatz aus einem dafür gewählten Materialmix bestehen. Üblicherweise bestehen Bremsbeläge aus einem Material mit hohem Metallanteil, umfassend beispielsweise Kupfer, Messing und Eisen. Dazu kommen verschiedene Sulfide, Graphit und/oder Karbid. Auch eine Carbonbeimischung ist bekannt.

Beim Bremsen, insbesondere beim dynamischen Bremsen, also einem Bremsen während einer Bewegung des Fahrzeugs, entstehen durch die Reibung und den Verschleiß Staubpartikel oder Feinstaubpartikel, die auch als Bremsstaubpartikel bezeichnet werden. Diese Bremsstaubpartikel wurden bislang ungehindert in die Umwelt abgeleitet, wobei die Bremsstäube zunehmend zur besseren Umweltverträglichkeit durch Bremsstaubabsaugungssysteme abgesaugt werden. Solche Bremsanlagen, kurz Bremsen, mit Bremsstaubabsaugungssystemen werden auch als Zero-Emission-Brakes, kurz ZEB, oder Low-Emission-Brakes, kurz LEB, bezeichnet.

Es ist bekannt, dass Absaugvorrichtungen solcher Bremsstaubabsaugungssysteme nicht kontinuierlich Bremsstaub, also Bremsstaubpartikel, aus dem Bremsinneren absaugen, sondern dass die Absaugvorrichtungen gesteuert durch ein Bremssystem beispielsweise bei Bedarf, nämlich etwa wenn ein Bremspedal betätigt wird, aktiviert werden. Insbesondere eine Geräuschlast durch ein mit einem Bremsstaubabsaugungssystem ausgestattetes Fahrzeug wird so reduziert.

Wird ein Fahrzeug neu entwickelt und ist für dieses ein Bremsstaubabsaugungssystem geplant, so kann ein Bremssteuergerät zum Ansteuern der Absaugungsvorrichtung in Abhängigkeit von einer Bremspedalstellung in einfacher Weise integriert werden. Bei bestehenden Systemen, wenn also ein Fahrzeug nachträglich mit einem Bremsstaubabsaugungssystem ausgestattet werden soll, ist demgegenüber ein kompletter Tausch des Bremssteuergeräts nötig oder es müssen zumindest zusätzliche, teilweise lange elektrische Leitungen von den einzelnen Absaugungsvorrichtungen zum Bremssteuergerät hinzugefügt werden, die fehleranfällig sind.

Aufgabe der vorliegenden Erfindung ist es daher, den Problemen des Standes der Technik zu begegnen. Insbesondere soll ein Bremsstaubabsaugungssystem und ein Verfahren zum Absaugen von Bremsstaubpartikeln mit einem Bremsstaubabsaugungssystem gefunden werden, das auf einfache Weise nachträglich in ein Fahrzeug integriert werden kann. Jedenfalls ist es Aufgabe der vorliegenden Erfindung, eine Alternative zum aus dem Stand der Technik Bekannten zu finden.

Hierzu schlägt die Erfindung ein Verfahren für ein Bremsstaubabsaugungssystem zum Absaugen von Bremsstaubpartikeln einer Bremsanordnung nach Anspruch 1 vor.

Die Erfindung umfasst demnach ein Verfahren für ein Bremsstaubabsaugungssystem. Das Bremsstaubabsaugungssystem dient zum Absaugen von Bremsstaubpartikeln einer Bremsanordnung. Die Bremsanordnung ist im Bereich eines Rades eines Fahrzeugs angeordnet und eingerichtet, um das Fahrzeug zu Bremsen. Die Bremsanordnung umfasst einen drehenden Teil, der eine Bremsscheibe oder eine Bremstrommel umfasst. Die Bremsscheibe oder Bremstrommel ist vorzugsweise über eine Radnabe mit dem zugeordneten Rad verbunden, sodass diese sich gleichläufig, also mit gleicher Drehzahl oder Drehgeschwindigkeit, wie das zugeordnete Rad um eine gemeinsame Drehachse dreht. Neben diesem Drehen Teil der Bremsanordnung, umfasst die Bremsanordnung einen feststehenden Teil. Ist der drehende Teil eine Bremsscheibe, umfasst der feststehende Teil einen Bremssattel und einen Bremskolben, die vorzugsweise an einem Fahrzeugrahmen mit einer Radachse derart verbunden sind, dass sie sich nicht mit dem Rad und der Bremsscheibe mitdrehen. Ist der drehende Teil eine Bremstrommel, umfasst der feststehende Teil beispielsweise auf einer Bremsträgerplatte angeordnete Bremsbacken, die beispielsweise mit einer Nockenwelle oder einem Bremskolben über einen Spreizkeil oder Hebel bewegt werden. Hier wird von einem Bremskolben gesprochen, auch wenn damit eine Kolben-Zylinder-Anordnung, also ein teilweise in einem Zylinder angeordneter und durch den Zylinder, etwa mit einem Druckfluid, bewegbarerer Kolben zum Aktuieren der Bremse gemeint ist.

Der feststehende Teil kann über seine Verbindung gegenüber dem Fahrzeugrahmen gefedert sein und ist somit nicht starr mit dem Fahrzeugrahmen verbunden. Insbesondere eine Drehbewegung des feststehenden Teils um eine gemeinsame Achse mit dem zugeordneten Rad ist jedoch gehemmt. Außerdem umfasst der feststehende Teil der Bremsanordnung mindestens einen Bremsbelag, der durch einen Bremsaktuator, beispielsweise den Bremskolben oder die Nockenwelle, die auch als Bremsschlüssel bezeichnet werden kann, gegen die Bremsscheibe gedrückt werden kann, um eine Drehbewegung der Bremsscheibe oder der Bremstrommel zu reduzieren, zu hemmen und/oder zu blockieren. Der Bremsaktuator bewegt den Bremsbelag demnach relativ zur Bremsscheibe oder Bremstrommel.

Das Bremsstaubabsaugungssystem umfasst vorzugsweise eine Absaugvorrichtung, die einen Lufteinlass im Bereich der Bremsanordnung und ein Gebläse umfasst. Das Gebläse ist so angeordnet, dass es Luft in den Lufteinlass einzieht, die Bremsstaub oder Feinstaub vom Bremsen enthalten kann. Das Gebläse bläst die Luft vorzugsweise durch einen Abscheider und/oder Filter, um den in der Luft enthaltenen Staub abzuscheiden bzw. zu filtern.

Ferner umfasst das Bremsstaubabsaugungssystem oder die Bremsanordnung einen Sensor, der eine Stellung einer Bewegung, wie einen Hub des Bremskolbens, erfasst und in Abhängigkeit von der erfassten Stellung der Bewegung ein elektrisches Signal ausgibt. Die Stellung kann auch als Position bezeichnet werden.

Das Verfahren umfasst das Ansteuern der Absaugvorrichtung, insbesondere des Gebläses der Absaugvorrichtung, in Abhängigkeit vom elektrischen Signal mit einem Steuergerät.

Ein Ansteuern umfasst hier vorzugsweise ein Einschalten und ein Ausschalten der Absaugvorrichtung, insbesondere des Gebläses. Weiter bevorzugt umfasst ein Ansteuern auch das Regeln oder Steuern der Drehzahl oder Leistung der Absaugvorrichtung, insbesondere des Gebläses.

Die Erfindung ermöglicht es, dass eine Absaugvorrichtung, insbesondere ein Gebläse der Absaugvorrichtung, nicht ständig im Betrieb sein muss, sondern zumindest zeitweise abgestellt werden kann. Die Dauer der Geräuschentwicklung durch solche Absaugvorrichtungen wird somit reduziert. Darüber hinaus bietet die erfindungsgemäße Lösung auch eine nachträglich einfache Integration von Bremsstaubabsaugungssystemen in Fahrzeuge, insbesondere, wenn bereits ein Sensor im Fahrzeug verfügbar ist, der die Bewegung eines Bremsaktuators, wie eines Bremskolbens, erfasst. Die Ausgangssignale solcher Sensoren können direkt für das Steuergerät verwendet werden. Auch wenn die Sensoren nicht vorhanden sind, können diese einfach direkt im Bereich des Rades, in dem auch die Absaugvorrichtung angeordnet ist, nachträglich installiert werden. Lange zusätzliche elektrische Leitungen sind so nicht nötig. Es müssen demnach keine elektrischen Leitungen beispielsweise zum Bremspedal vorgesehen sein, um eine Bremsbetätigung zu erfassen.

Gemäß einer ersten Ausführungsform ist der Bremsaktuator zum Bewegen des Bremsbelags relativ zur Bremsscheibe oder zur Bremstrommel eingerichtet, eine Stellung einer Linearbewegung, insbesondere einen Hub, vorzugswese mit einem Bremskolben, oder eine Stellung einer Drehbewegung, insbesondere einen Drehwinkel, vorzugsweise mit einem Bremsschlüssel, zu variieren. Das elektrische Signal des Sensors zeigt eine Bewegung, insbesondere den Hub oder den Drehwinkel an. Der Sensor ist vorzugsweise ein Wegesensor oder ein Drehwinkelsensor. Das elektrische Signal entspricht beispielsweise einer elektrischen Größe, wie einer Spannung. Das elektrische Signal, vorzugsweise die Spannung, variiert vorzugsweise in Abhängigkeit vom Hub oder vom Drehwinkel. Das elektrische Signal ist somit vorzugsweise ein analoges elektrisches Signal. Der Hub entspricht dem Kolbenhub des Bremskolben, der teilweise auch als Zylinderhub bezeichnet wird, und den Weg einer Linearführung des Bremskolbens bezeichnet. Vorzugsweise besteht ein im Wesentlichen linearer Zusammenhang zwischen dem Hub oder dem Drehwinkel und dem elektrischen Signal.

Durch die Berücksichtig der Stellung der Bewegung des Bremsaktuators und nicht nur einer bloßen Betätigung der Bremse ist auch die Intensität einer Bremsung bestimmbar. Die Intensität entspricht einem Maß der geforderten Bremswirkung, also wie hoch die geforderte negative Beschleunigung ist, die von der Bremsanlage umgesetzt werden soll. Es kann in Abhängigkeit von der Intensität das Gebläse abgeschaltet bleiben, wenn die durch das elektrische Signal detektierbare Intensität unter einem Intensitätsschwellenwert bleibt und keine Hohe Bremsstaubentwicklung zu erwarten ist. Es kann auch die Leistung oder die Drehzahl der Absaugvorrichtung in Abhängigkeit von der Intensität gesteuert werden.

Gemäß einer weiteren bevorzugten Ausführungsform ist der Sensor ein Verschleißsensor, der vorzugsweise in Abhängigkeit vom Hub des Bremskolbens oder einem Drehwinkel, etwa der Nockenwelle, den Verschleiß der Bremsbeläge und/oder der Bremsscheibe erfasst.

Solche Sensoren sind häufig bereits in Fahrzeuge integriert und die elektrischen Signale dieser Sensoren können unmittelbar verwendet werden. Eine einfache Integration ist somit möglich.

Gemäß einer weiteren Ausführungsform wird mit dem Steuergerät der zeitliche Verlauf des elektrischen Signals überwacht. Eine Betätigung der Bremsanordnung wird erfasst, wenn im Verlauf eine Steigung des elektrischen Signals erfasst wird, deren Wert oder Betrag oberhalb des Werts oder Betrags mindestens eines vordefinierten Schwellenwerts liegt.

Demnach ist vorzugsweise mindestens eine Schwellenwert definiert. Dieser Schwellenwert ist beispielsweise durch Versuche oder Simulation vorbestimmt und besonders bevorzugt im Steuergerät hinterlegt. Der Schwellenwert kann auch automatisch vom Steuergerät erfasst oder angepasst werden, beispielsweise in Abhängigkeit von einer Lösebewegung, einem Verschleiß der Bremsbeläge und/oder der Bremsscheibe.

Der Verlauf des elektrischen Signals, beispielsweise der Verlauf der Spannung, wird vom Steuergerät vorzugsweise kontinuierlich überwacht oder erfasst. Wird eine Änderung im Signal erfasst, wird geprüft, ob der Betrag der Steigung dieser Änderung oberhalb oder unterhalb des Betrags des Schwellenwerts liegt. Eine Steigung entspricht hier der mathematischen Ableitung des zeitlichen Verlaufs des elektrischen Signals, also einer Änderung des elektrischen Signals während eines zeitlichen Intervalls.

Durch Berücksichtigung der Steigung des zeitlichen Verlaufs und den Vergleich mit einem Schwellenwert, kann eine Betätigung, nämlich eine Aktivierung oder Deaktivierung, einer Bremsung sicher erfasst und vorzugsweise von einem unbetätigten Zustand unterschieden werden. Der Ausführungsform liegt hierbei die Kenntnis zugrunde, dass ein Bremsaktuator, wie ein Bremskolben, zum Überwinden eines Lüftspiels bei starken aber auch bei leichten Bremsungen vor der eigentlichen Bremsung zunächst schnell ausfährt, um das Lüftspiel zu überwinden. Die Steigung des elektrischen Signals ist demnach beim Überwinden des Lüftspiels höher als während der tatsächlichen Bremsung.

Das Lüftspiel bezeichnet einen Abstand zwischen Bremsbelag oder Bremsbelägen und der Bremsscheibe im unbetätigten Zustand, also im Ruhezustand, der Bremse. Sobald eine Bremsung von einem Fahrer gefordert wird, wird dieses Lüftspiel im Wesentlichen Unabhängig von der Intensität der geforderten Bremsung schnell überwunden bis der oder die Bremsbeläge an der Bremsscheibe anliegen, um die eigentliche Bremsung durchzuführen. Da sich diese Lüftspiel mit dem Verschleiß auch kurzzeitig verändern kann, ist es bevorzugt auch möglich, den Schwellenwerte im Steuergerät, insbesondere automatisch, an ein verändertes Lüftspiel anzupassen. Insbesondere kann auch das Lüftspiel anhand der Steigung des elektrischen Signals vorab erkannt und der Schwellenwert anhand des erkannten Lüftspiels angepasst werden.

In Bremsanordnungen wird ein Lüftspiel üblicherweise mittels einer mechanischen oder elektromechanischen Nachstellvorrichtung konstant gehalten. Es wird nachgestellt, wenn der Wert des tatsächlichen Lüftspiels ungleich einem konstruktiv festgelegten Lüftspiel ist. Entspricht der Wert des tatsächlichen Lüftspiels also dem konstruktiv festgelegten Lüftspiel, erfolgt keine Nachstellung.

Das konstruktiv festgelegte Lüftspiel ist beispielsweise durch geometrische Größen im Nachstellmechanismus festgelegt. Das tatsächliche Lüftspiel wird über einen Mechanismus oder eine elektronische Schaltung, etwa durch Auswertung der elektrischen Signale eines Verschleißsensors, insbesondere bei Einleitung einer oder jeder Bremsbetätigung, als der Leerweg bestimmt, den eine Bewegung des Bremsaktuators aus einer Ruheposition bis zur Anlage der Bremsbeläge zurücklegt. Das tatsächliche Lüftspiel wird dann mit dem konstruktiv festgelegten Lüftspiel verglichen und im Fall der Abweichung angepasst.

Kurzfristig können das tatsächliche Lüftspiel und das konstruktive Lüftspiel ungleich voneinander, etwa bei übermäßiger Verschleiß durch Dauerbremsung während einer Talfahrt oder im Fall, dass noch keine Nachstellung stattgefunden hat, sein. Der Schwellenwert kann in diesem Fall, beispielsweise kurzfristig, automatisch verändert werden.

Gemäß einer weiteren Ausführungsform sind oder werden ein positiver Schwellenwert und ein negativer Schwellenwert vordefiniert oder vorbestimmt.

Ferner wird von dem Steuergerät eine positive Steigung des zeitlichen Verlaufs des elektrischen Signals, die oberhalb des positiven Schwellenwerts liegt, als Betätigungsbewegung und eine negative Steigung des zeitlichen Verlaufs des elektrischen Signals, die unterhalb des negativen Schwellenwerts liegt, als Lösebewegung erfasst. Gemäß einer Alternative wird eine positive Steigung des zeitlichen Verlaufs des elektrischen Signals, die oberhalb des positiven Schwellenwerts liegt, als Lösebewegung und eine negative Steigung des zeitlichen Verlaufs des elektrischen Signals, die unterhalb des negativen Schwellenwerts liegt, als Betätigungsbewegung erfasst. Eine Betätigungsbewegung entspricht einer Überwindung des Lüftspiels durch den Bremsaktuator, wie den Bremskolben, aus einer Ruhestellung in eine Stellung, bei der der oder die Bremsbeläge in Kontakt mit der Bremsscheibe kommen. Eine Lösebewegung entspricht einer Überwindung des Lüftspiels nach in der Stellung, bei der der oder die Bremsbeläge in Kontakt mit der Bremsscheibe sind, zurück in die Ruhestellung.

Mit dem Steuergerät ist so eindeutig zwischen einer Betätigung, die einem Aktivieren und einem Deaktivieren der Bremse entspricht, unterscheidbar, so dass Zeiträume einer aktiven Bremsung, in denen Bremsstaub entstehen kann, eindeutig von Zeiträumen einer Ruhestellung der Bremse unterscheidbar sind, in denen kein Bremsstaub entstehen kann.

Gemäß einer weiteren Ausführungsform wird die Absaugvorrichtung, insbesondere das Gebläse, während oder nach dem Erkennen einer Betätigungsbewegung von dem Steuergerät aktiviert und besonders bevorzugt die Leistung geregelt und/oder gesteuert. Außerdem wird die Absaugvorrichtung, insbesondere das Gebläse, während oder nach dem Erkennen einer Lösebewegung deaktiviert.

Eine Absaugung von Bremsstaub findet demnach immer in Zeiträumen statt, in denen ein Bremstaub entstehen kann. Die Absaugvorrichtung ist demgegenüber in Zeiträumen, in denen kein Bremsstaub entstehen kann, abgeschaltet und entwickelt somit keine Geräusche.

Gemäße einer weiteren Ausführungsform wird eine aktive Bremsung als ein zeitlicher Bereich im Verlauf des elektrischen Signals erkannt, der zwischen einer erkannten Betätigungsbewegung und einer erkannten Lösebewegung, liegt. Die Leistung und/oder Dauer der Aktivierung der Absaugvorrichtung, insbesondere des Gebläses, kann vorzugsweise in Abhängigkeit von der Dauer der aktiven Bremsung gesteuert oder geregelt werden.

Demnach wird berücksichtigt, dass bei kurzzeitigen Bremsungen vergleichsweise weniger Bremsstaub entsteht, als bei längeren Bremsungen. Entsprechend wird die Dauer und/oder die Leistung der Absaugung angepasst. Besonders bevorzugst wird das Gebläse derart gesteuert, dass die Leistung während der Dauer der Bremsung, insbesondere kontinuierlich, zunimmt. Hier wird berücksichtigt, dass sich mit zunehmender Dauer einer Bremsung die Komponenten der Bremseinrichtung erwärmen wodurch der Verschleiß verstärkt werden kann, also die pro Zeiteinheit erzeugte Bremsstaubmenge zunimmt. Dem wird begegnet, indem die Leistung der Absaugvorrichtung mit zunehmender Dauer der Bremsung erhöht wird. Bevorzugt ist während einer aktiven Bremsung der Wert des elektrischen Signals im Wesentlichen konstant oder der Betrag einer Steigung liegt unter dem Betrag des oder der Schwellenwerte.

Gemäß einer weiteren Ausführungsform wird mit dem Steuergerät eine Änderung des elektrischen Signals im Verlauf des elektrischen Signals, also einer Differenz der Werte, vor und nach einer erkannten Betätigungsbewegung erfasst. Zusätzlich oder alternativ wird eine Änderung des Werts des elektrischen Signals nach einer erkannten Betätigungsbewegung bis zum Erfassen einer Lösebewegung erfasst. Die Dauer und/oder Leistung und/oder der Zeitpunkt einer Aktivierung der Absaugvorrichtung wird in Abhängigkeit von der Differenz und/oder der Änderung des elektrischen Signals bestimmt.

Eine Änderung des elektrischen Signals im Verlauf des elektrischen Signals vor und nach einer erkannten Betätigungsbewegung entspricht einer Differenz der Werte des elektrischen Signals vor der erkannten Betätigungsbewegung und nach der erkannten Betätigungsbewegung. Eine Änderung des Werts des elektrischen Signals nach der erkannten Betätigungsbewegung bis zum Erfassen einer Lösebewegung entspricht der Differenz eines Werts, den das elektrische Signal direkt nach dem Erkennen der Betätigungsbewegung aufweist und einem Wert, den das elektrische Signal kurz vorm Erfassen oder beim Erfassen der Lösebewegung aufweist.

Die Änderungen, also die Differenzen, können als Indikator für eine Intensität einer gewünschten Bremsung angesehen werden und sind somit Indikator für die Menge an Bremsstaub, die durch die Bremsung erzeugt wird. Somit wird die Dauer oder die Leistung der Absaugvorrichtung vorzugsweise in Abhängigkeit mindestens einer der beiden erfassten Änderungen oder Differenzen oder einer Summe aus den beiden Änderungen oder Differenzen gesteuert.

Gemäß einer weiteren Ausführungsform wird ein Geschwindigkeitsindikator des Fahrzeugs vor, während oder unmittelbar nach einer erfassten Betätigungsbewegung bestimmt. In Abhängigkeit vom erfassten Geschwindigkeitsindikator wird zwischen einem statischen und einem dynamischen Bremsen unterschieden. Im Fall einer erkannten Betätigungsbewegung wird die Absaugvorrichtung nur beim dynamischen Bremsen aktiviert und beim statischen Bremsen bleibt die Absaugvorrichtung deaktiviert. Insbesondere wird im Fall, dass der Geschwindigkeitsindikator oberhalb eines Geschwindigkeitsschwellenwerts liegt, von einer dynamischen Bremsung ausgegangen und im Fall, dass der Geschwindigkeitsindikator unter dem Geschwindigkeitsschwellenwert liegt, von einem dynamischen Bremsen ausgegangen.

Es kann somit darauf verzichtet werden, die Absaugvorrichtung zu aktivieren, wenn im Stillstand des Fahrzeugs die Bremse betätigt wird, da hier üblicherweise wenig oder kein Bremsstaub erzeugt wird.

Gemäß einer weiteren Ausführungsform wird als Geschwindigkeitsindikator mindestens ein Beschleunigungswert, ein Geschwindigkeitswert und/oder ein Drehzahlwert des Rades vor und nach einer erfassten Betätigungsbewegung bestimmt. In Abhängigkeit von einer Differenz der erfassten Beschleunigungswerte, Geschwindigkeitswerte oder Drehzahlwerte wird die Dauer und/oder die Leistung der Absaugvorrichtung gesteuert oder geregelt. Die Differenz der Beschleunigungswerte, der Geschwindigkeitswerte oder der Drehzahlwerte gibt unmittelbar Aufschluss über die Intensität der Bremsung und entsprechend über die geschätzte Menge von Bremsstaub. Durch Berücksichtigung der Differenzen erfolgt die Steuerung oder Regelung der Absaugvorrichtung, so dass eine entsprechend stärkere oder schwächere Absaugung erfolgt.

Gemäß einer weiteren Ausführungsform entspricht der Geschwindigkeitsindikator einem Druckwert eines Drucksensors in einem Raum eines Federspeicher-Membranzylinders.

Es sind kombinierte Federspeicher-Membranzylinder bekannt. Bei Betätigung der Feststellbremsanlage wird ein unter Druck stehender Raum eines Membranzylinders des Federspeicher-Membranzylinders über einen Anschluss teilweise oder ganz entlüftet. Hierbei wirkt eine Kraft einer sich entspannenden Druckfeder eines Federspeichers des Federspeicher-Membranzylinders über einen Kolben und eine Druckstange auf die Radbremse. Die maximale Bremskraft des Federspeichers wird bei völliger Entlüftung des Raumes des Membranzylinders erzielt. Da die Bremskraft in diesem Fall ausschließlich mechanisch durch die Druckfeder aufgebracht wird, kann der Federspeicher so für die Feststellbremsanlage verwendet werden.

Zum Lösen der Bremse wird der Raum über den Anschluss wieder belüftet. Zur Unterscheidung zwischen einem statischen und einem dynamischen Bremsen, also einer statischen und einer dynamischen Bremssituation, kann daher der Drucksensor verwendet werden. Der Drucksensor wertet den Druck innerhalb des Raumes aus. Ist der Druck kleiner als ein als Lösedruck bezeichneter Schwellenwert, ist eine Entlüftung des Federspeicherteils und auch damit einer Parkbremssituation, also ein statisches Bremsen, beabsichtigt. Ist der Druck gleich oder größer dem Lösedruck, ist das Fahrzeug in Fahrstellung und ein Bremsen kann als dynamisches Bremsen gewertet werden.

Gemäß einer weiteren Ausführungsform wird der Geschwindigkeitsindikator, vorzugsweise der Beschleunigungswert, der Geschwindigkeitswert oder der Drehzahlwert, von einem Bremssteuergerät oder von einem Raddrehzahlsensor des Rades erfasst. Insbesondere ist das Steuergerät eingerichtet, aus einem Verlauf der Raddrehzahl Geschwindigkeitswerte und Beschleunigungswerte zu bestimmen.

Beispielsweise ist auch ein Bremssteuergerät über eine Busverbindung mit dem Steuergerät des Bremsstaubabsaugungssystems verbindbar, wenn diese Busverbindung vorhanden ist und Geschwindigkeitswerte können hier abgerufen werden. Es kann jedoch, statt einer Verbindung zwischen Bremssteuergerät und Steuergerät, direkt ein Raddrehzahlsensor verwendet werden, der am Rad angeordnet ist, das der Bremsanordnung und dem Bremsstaubabsaugungssystem zugeordnet ist. Solch ein Raddrehzahlsensor kann auch mitverwendet werden, wenn dieser beispielswies bereits installiert ist und Raddrehzahlwerte an ein Bremssteuergerät übergibt. Ein solcher Raddrehzahlsensor kann demnach direkt vom Bremsstaubabsaugungssystem, insbesondere dem Steuergerät, verwendet werden, um die Raddrehzahlwerte zu bestimmen.

Gemäß einer weiteren Ausführungsform speichert das Steuergerät des Bremsstaubabsaugungssystems die Anzahl der Betätigungsbewegungen und/oder Lösbewegungen und insbesondere die erfassten Intensitäten von Bremsungen, insbesondere in Abhängigkeit von den Differenzen des Verlaufs. Zusätzlich oder alternativ erfasst das Steuergerät Umgebungsparameter, wie eine Umgebungstemperatur oder eine Temperatur der Bremse. Die Absaugvorrichtung wird zusätzlich in Abhängigkeit von der Anzahl, der Intensität und/oder dem Umgebungsparameter gesteuert oder geregelt. Die Anzahl der Betätigungsbewegungen und Lösbewegungen sowie die Intensität zeigen an, wie hoch der Verschleiß oder eine Temperatur der Bremsbeläge und/oder Bremsscheiben zurzeit ist. Entsprechend kann so auf eine Menge einer Bremsstaubentwicklung geschlossen werden. Ebenso spielen Umgebungstemperatur, wie Feuchtigkeit oder Temperatur, eine Rolle für die zurzeit erzeugte Menge an Bremsstaub, so dass ein Steuern und/oder Regeln der Absaugvorrichtung in Abhängigkeit von der Anzahl, der Intensität oder den Umgebungstemperaturen es ermöglicht, die Absaugvorrichtung nur solange oder mit einer entsprechenden Leistung zu betreiben, bis potenzieller Bremsstaub tatsächlich entfernt wurde.

Außerdem umfasst die Erfindung ein Steuergerät zum Ausführen eines Verfahrens nach einer der vorgenannten Ausführungsformen.

Gemäß einer Ausführungsform des Steuergeräts ist dieses im Bereich des Rades oder einer Bremsanordnung anordenbar. Es sind somit für jedes Rad einzelne Steuergeräte vorgesehen. Gemäß einer Alternative ist das Steuergerät ein zentrales Steuergerät und besonders bevorzugt Bestandteil eines Bremssteuergeräts. Ein zentrales Steuergerät entspricht einem Steuergerät, das die Steuerung gleichzeitig für eine Vielzahl von Absaugvorrichtungen, die jeweils im Bereich mehrerer Bremsanordnungen angeordnet sind, ausführt.

Ferner betrifft die Erfindung ein Bremsstaubabsaugungssystem zur Absaugung von Bremsstaub einer Bremsanordnung mit mehreren im Bereich eines Rades jeweils anordenbaren Steuergeräten oder einem zentralen Steuergerät. Vorzugsweise ist das Steuergerät ein Steuergerät nach einer der vorgenannten Ausführungsformen.

Das Steuergerät ist gemäß einer weiteren Ausführungsform mit einem Sensor, insbesondere mit einem Verschleißsensor, der Bremsanordnung verbindbar, um elektrische Signale vom Sensor zu empfangen und in Abhängigkeit vom elektrischen Signal eine Absaugvorrichtung einzuschalten, abzuschalten und/oder die Leistung oder Dauer der Einschaltung zu steuern und/oder zu regeln.

Gemäß einer Ausführungsform umfasst das Bremsstaubabsaugungssystem mehrere Bremsanordnungen.

Außerdem umfasst die Erfindung ein Fahrzeug mit einem Steuergerät nach einer der vorgenannten Ausführungsformen und/oder einem Bremsstaubabsaugungssystem nach einer der vorgenannten Ausführungsformen. Vorzugsweise ist das Fahrzeug eingerichtet, das Verfahren nach einer der vorgenannten Ausführungsformen auszuführen.

Weitere Ausführungsformen ergeben sich anhand der in den Figuren näher gezeigten Ausführungsbeispielen. Hierbei zeigen:
Fig. 1 ein Bremsstaubabsaugungssystem gemäß einem ersten Ausführungsbeispiel,
Fig. 2 einen Verlauf eines elektrischen Signals sowie dessen Ableitung und
Fig. 3 die Schritte eines Verfahrens gemäß einem Ausführungsbeispiel.

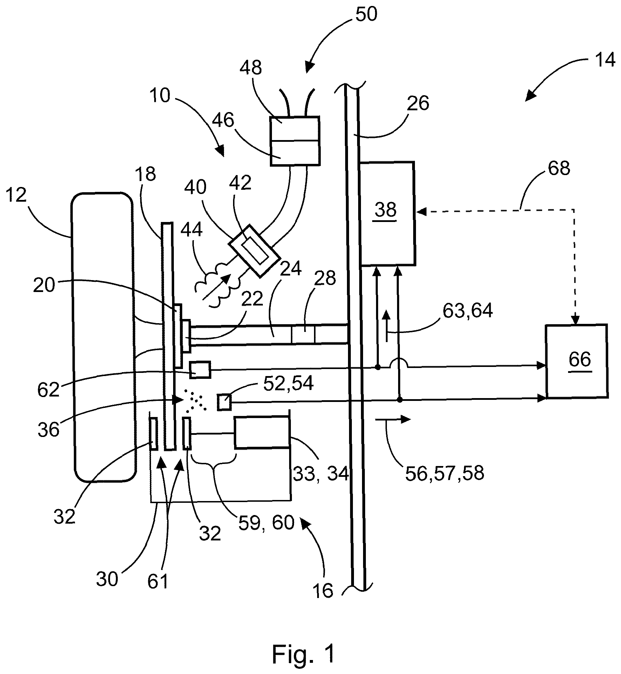

Fig. 1 zeigt ein Bremsstaubabsaugungssystem 10 im Bereich eines Rades 12 eines Fahrzeugs 14. Ferner ist auch eine Bremsanordnung 16 dargestellt. Alle in Fig. 1 dargestellten Komponenten sind nur schematisch dargestellt, um die Funktionsweise eines Ausführungsbeispiels der Erfindung zu erläutern.

Die Bremsanordnung 16 umfasst eine Bremsscheibe 18, die mit dem Rad 12 fest an einer Radnabe 20 verbunden ist. Bremsscheibe 18 und Rad 12 drehen somit während einer Fortbewegung des Fahrzeugs 14 mit gleicher Drehzahl oder Winkelgeschwindigkeit. Hierzu ist die Radnabe 20 über ein Radlager 22 mit einer Radachse 24 verbunden.

Die Radachse 24 ist an einem Rahmen 26 des Fahrzeugs 14 derart gelagert, dass die Radachse 24 gegenüber dem Rahmen 26 gefedert ist und der Drehbewegung der Bremsscheibe 18 und des Rades 12 nicht folgt. Die Radachse 24 steht somit im Hinblick auf eine Drehbewegung fest. Die Radachse 24 ist demnach über ein Lager 28, insbesondere in einer senkrechten Richtung zu einer durch den Fahrzeugrahmen 26 gebildeten Ebene gegenüber dem Fahrzeugrahmen 26 schwenkbar, um eine Federung des Rades 12 gegenüber dem Rahmen 26 zu realisieren. Für die Federung vorgesehene Komponenten sind in Fig. 1 nicht dargestellt.

Darüber hinaus umfasst die Bremsanordnung 16 einen mit der Radachse 24 verbundenen Bremssattel 30, der schematisch U-förmig dargestellt ist. Innerhalb der parallelen Schenkel der U-Form sind zwei Bremsbeläge 32 und ein Bremsaktuator 33, der einem Bremskolben 34 entspricht, angeordnet. In Fig. 1 ist eine Ruhestellung der Bremsanordnung 16 dargestellt, so dass ein Lüftspiel 61 zwischen Bremsbelägen 32 und Bremsscheibe 18 zu erkennen ist. Durch Ausfahren des Bremskolbens 34 wird zunächst der rechts dargestellte Bremsbelag 32 gegen die Bremsscheibe 18 gedrückt. Durch weiteres Ausfahren des Bremskolbens 34 wird der Bremssattel 30 insgesamt nach rechts verschoben und somit der links dargestellte Bremsbelag 32 ebenfalls gegen die Bremsscheibe 18 gedrückt. Bremssattel 30, Bremsbeläge 32 und Bremskolben 34 sind mit der Radachse 24 verbunden, so dass eine Kontaktierung der Bremsbeläge 32 mit der Bremsscheibe 18 dazu führt, dass eine Reibung zwischen den Bremsbelägen 32 und der Bremsscheibe 18 entsteht, durch die die Bremsscheibe 18 aus einer Drehbewegung gebremst werden kann. Durch die Reibung entsteht Bremsstaub 36.

Der Bremsstaub 36 kann über das Bremsstaubabsaugungssystem 10 abgesaugt werden, indem ein Steuergerät 38 des Bremsstaubabsaugungssystems 10 eine Absaugvorrichtung 40 mit einem Gebläse 42 aktiviert. Das Gebläse 42 zieht Luft durch einen Absaugstutzen 44, der im Bereich der Bremsscheibe 18 angeordnet ist, Luft ein und führt diese durch einen Abscheider 46 und einen Filter 48, so dass die Luft an einem Luftauslass 50 vorzugsweise befreit von dem Bremsstaub 36 ausgeblasen wird.

Zum Aktivieren der Absaugvorrichtung 40, nämlich insbesondere des Gebläses 42 ist das Steuergerät 38 mit einem am Bremskolben 34 angeordneten Sensor 52, der vorzugsweise ein Verschleißsensor 54 ist, verbunden, um ein elektrisches Signal 56, das insbesondere einer Spannung 58 oder einer anderen elektrischen Größe 57 entspricht, zu empfangen und das einen Hub 60 des Bremskolbens 34 darstellt. Außerdem ist das Steuergerät 38 mit einem Raddrehzahlsensor 62 verbunden, der die Drehzahl des Rades 12 misst und einen Geschwindigkeitsindikator 63, der hier einem Raddrehzahlwert 64 entspricht, an das Steuergerät 38 übermittelt. Zusätzlich ist ein Bremssteuergerät 66 vorgesehen, das vorzugsweise ebenfalls die Signale des Sensors 52 sowie des Raddrehzahlsensors 62 empfängt und gemäß diesem Ausführungsbeispiel auch mit dem Steuergerät 38 kommuniziert. Eine Kommunikationsleitung 68 zwischen dem Bremssteuergerät 66 und dem Steuergerät 38 ist gemäß anderen Ausführungsbeispielen nicht bereitgestellt.

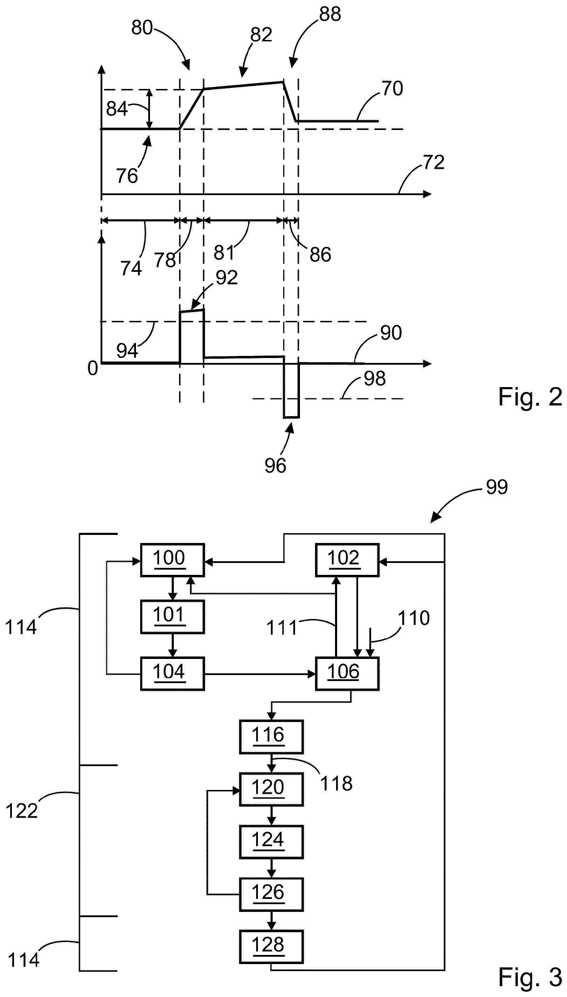

Fig. 2 zeigt im oberen Diagramm den zeitlichen Verlauf 70 des elektrischen Signals 56, das vorzugsweise linear abhängig von einer Stellung einer Bewegung 59, hier vom Hub 60 des Bremskolbens 34, ist. Demnach entspricht vorzugsweise der Verlauf 70 des elektrischen Signals 56 auch einem Verlauf des Hubs 60. Der Verlauf 70 ist über eine Zeitachse 72 aufgetragen. Der Verlauf 70 des elektrischen Signals 56 entspricht vorzugsweise einer Spannung 58, die über die senkrechte Achse des oberen Diagramms aufgetragen ist. Die Spannung 58 stellt demnach in einem zeitlichen Bereich 74 zunächst eine Ruhestellung 76 der Bremsanordnung 16 dar, indem ein Lüftspiel 61 zwischen Bremsbelägen 32 und Bremsscheibe 18 besteht. Im zeitlichen Bereich 78 erfolgt dann ein Betätigen der Bremse, wodurch der Bremskolben 34 ausfährt, um das Lüftspiel 61 zu überwinden. Die Spannung zeigt demnach eine Betätigungsbewegung 80 an. Im darauf anschließenden zeitlichen Bereich 81 findet eine aktive Bremsung 82 statt. Hierbei steigt die Spannung 58 noch leicht an, da eine Reibung zu einem Abrieb zwischen den Bremsbelägen 32 und der Bremsscheibe 18 führt, ist aber im Wesentlichen konstant. Nach der Betätigungsbewegung 80 weist das elektrische Signal 56 demnach eine Differenz 84 zu einem Zeitpunkt im Bereich der Ruhestellung 76 auf, die im Wesentlichen konstant ist und leicht ansteigt. Ist die aktive Bremsung 82 abgeschlossen, wird im zeitlichen Bereich 86 der Bremskolben 34 wieder eingefahren, bis das Lüftspiel 61 bereitsteht. Hier fällt das elektrische Signal 56 ab, so dass die Spannung 58 in diesem zeitlichen Bereich 81 eine Lösebewegung 88 anzeigt. Nach der Lösebewegung 88 entspricht das elektrische Signal 56 im Wesentlichen dem elektrischen Signal 56 vor der Betätigungsbewegung 80, wobei dieses elektrische Signal 56 in Abhängigkeit vom Verschleiß, der bei der aktiven Bremsung 82 auftritt, erhöht ist.

Im unteren Diagramm der Fig. 2 ist über denselben Zeitbereich eine Steigung 90 des elektrischen Signals 56 dargestellt. Im zeitlichen Bereich 78 ist eine positive Steigung 92 erkennbar, die über einem positiven Schwellenwert 94 liegt. Im zeitlichen Bereich 86 ist demgegenüber eine negative Steigung 96 erkennbar, die unterhalb eines negativen Schwellenwerts 98 liegt. Demnach ist im zeitlichen Bereich 74 vor der Betätigungsbewegung 80 sowie im zeitlichen Bereich nach der Lösebewegung 88 eine Steigung 90 mit einem Wert 0 erkennbar. Wird die Betätigungsbewegung 80 ausgeführt, nimmt die Steigung 90 bis zur positiven Steigung 92 zu, um das Lüftspiel 61 zu überwinden. Danach fällt die Steigung 90 auf einen Wert im Bereich von 0, der in Abhängigkeit vom Verschleiß während der aktiven Bremsung 82 leicht über 0 liegen kann. Danach fällt die Steigung 90 bis zu einer negativen Steigung 96 ab, während die Lösebewegung 88 ausgeführt wird, und das Lüftspiel 61 wiederhergestellt wird. Das Steuergerät 38 überwacht nun das elektrische Signal 56 und dessen Steigung 90 und erfasst die Betätigungsbewegung 80 anhand der positiven Steigung 92, die oberhalb des positiven Schwellenwerts 94 liegt, und die Lösebewegung 88 anhand einer negativen Steigung 96, die unterhalb des negativen Schwellenwerts 98 liegt. Die Absaugvorrichtung 40, insbesondere das Gebläse 42, können so gezielt in dem zeitlichen Bereich aktiviert werden, in dem eine Reibung zwischen Bremsbelägen 32 und Bremsscheibe 18 auftritt und entsprechend Bremsstaub 36 entstehen kann.

Fig. 3 zeigt die Schritte des Verfahrens 99 gemäß einem Ausführungsbeispiel. Im Schritt 100, der kontinuierlich ausgeführt wird, wird das elektrische Signal 56 erfasst, also überwacht. Gleichzeitig wird im Schritt 102 der Raddrehzahlwert 64 des Raddrehzahlsensors 62 erfasst oder überwacht. Im Schritt 101 wird eine positive Steigung 92 im elektrischen Signal 56 erkannt und im Schritt 104 geprüft, ob die positive Steigung 92 oberhalb des positiven Schwellenwerts 94 liegt. Liegt die positive Steigung 92 unterhalb des positiven Schwellenwerts 94, wird wieder Schritt 100 ausgeführt. Anderenfalls wird der Schritt 106 ausgelöst, in dem geprüft wird, ob der Raddrehzahlwert 64 des Raddrehzahlsensors 62 vor dem Auftreten der Steigung 90 im elektrischen Signal 56 oberhalb eines Raddrehzahlschwellenwerts 110 liegt. Ergibt die Prüfung im Schritt 106, dass der Raddrehzahlwert 64 unterhalb des Raddrehzahlschwellenwerts 110 liegt, wird von einer statischen Bremsung 111 ausgegangen und wieder die Erfassung in den Schritten 100 und 102 fortgesetzt. Die Absaugvorrichtung 40, insbesondere das Gebläse 42, bleiben während dieser gesamten Schritte deaktiviert 114. Wird im Schritt 106 jedoch erfasst, dass der Raddrehzahlwert 64 oberhalb des Raddrehzahlschwellenwerts 110 liegt, wird von einer dynamischen Bremsung 115 ausgegangen. Im Schritt 116 wird dann eine Raddrehzahldifferenz 118 bestimmt, die der Differenz der Raddrehzahlwerte 64 vor und nach dem Auftreten der positiven Steigung 92 entsprechen. Im Schritt 120 wird dann das Gebläse 42 aktiviert 122 und Bremsstaub 36 abgesaugt. Im Schritt 124 wird dann eine negative Steigung 96 erfasst und im Schritt 126 geprüft, ob diese negative Steigung 96 unterhalb des negativen Schwellenwerts 98 liegt. Liegt die negative Steigung 96 nicht unterhalb des negativen Schwellenwerts 98, wird weiter Schritt 120 ausgeführt. Anderenfalls wird im Schritt 128 das Gebläse 42 abgeschaltet und es findet erneut die Überwachung des Drehzahlwerts sowie des elektrischen Signals 56 statt.

### Bezugszeichen (Teil der Beschreibung)

- 10: Bremsstaubabsaugungssystem
- 12: Rad
- 14: Fahrzeugs
- 16: Bremsanordnung
- 18: Bremsscheibe
- 20: Radnabe
- 22: Radlager
- 24: Radachse
- 26: Fahrzeugrahmen
- 28: weiteres Radlager
- 30: Bremssattel
- 32: Bremsbeläge
- 33: Bremsaktuator
- 34: Bremskolben
- 36: Bremsstaub
- 38: Steuergerät
- 40: Absaugvorrichtung
- 42: Gebläse
- 44: Absaugstutzen
- 46: Abscheider
- 48: Filter
- 50: Luftauslass
- 52: Sensor
- 54: Verschleißsensor
- 56: elektrisches Signal
- 57: elektrische Größe
- 58: Spannung
- 59: Stellung einer Bewegung
- 60: Hub
- 61: Lüftspiel
- 62: Raddrehzahlsensor
- 63: Geschwindigkeitsindikator
- 64: Raddrehzahlwert
- 66: Bremssteuergerät
- 68: Kommunikationsleitung
- 69: Wert
- 70: zeitlicher Verlauf
- 71: Geschwindigkeitswert
- 72: Zeitachse
- 74: zeitlicher Bereich
- 76: Ruhestellung
- 78: zeitlicher Bereich
- 80: Betätigungsbewegung
- 81: zeitlicher Bereich
- 82: aktive Bremsung
- 84: Differenz
- 86: zeitlicher Bereich
- 88: Lösebewegung
- 90: Steigung
- 92: positive Steigung
- 94: positiver Schwellenwert
- 96: negative Steigung
- 98: negativer Schwellenwert
- 99: Verfahren
- 100: Erfassen elektrisches Signal
- 101: Erkennen positive Steigung im elektrischen Signal
- 102: Erfassen Drehzahl des Raddrehzahlsensors
- 104: Prüfen, ob positive Steigung oberhalb des positiven Schwellenwerts liegt
- 106: Prüfen, ob Raddrehzahlwert des Raddrehzahlsensors vor dem Auftreten der Steigung im elektrischen Signal oberhalb eines Raddrehzahlschwellenwerts liegt
- 110: Raddrehzahlschwellenwert
- 111: statische Bremsung
- 114: Gebläse ist deaktiviert
- 115: dynamische Bremsung
- 116: Bestimmen Raddrehzahldifferenz
- 118: Raddrehzahldifferenz
- 120: Aktivieren Gebläse
- 122: Gebläse wird aktiviert
- 124: Erfassen negative Steigung und Prüfen, ob negative Steigung unterhalb des negativen Schwellenwerts liegt
- 126: Prüfen, ob negative Steigung unterhalb des negativen Schwellenwerts liegt
- 128: Abschalten Gebläse

## Patentansprüche

1. Verfahren (99) für ein Bremsstaubabsaugungssystem (10) mit einer Absaugvorrichtung (40) zum Absaugen von Bremsstaub (36) einer Bremsanordnung (16), die im Bereich eines Rades (12) eines Fahrzeugs (14) angeordnet ist, wobei die Bremsanordnung (16) eine Bremsscheibe (18) oder Bremstrommel, mindestens einen Bremsbelag (32) und einen Bremsaktuator (33) zum Bewegen des Bremsbelags (32) relativ zur Bremsscheibe (18) oder Bremstrommel umfasst, wobei das Bremsstaubabsaugungssystem (10) oder die Bremsanordnung (16) einen Sensor (52) zum Erfassen einer Stellung der Bewegung (59) des Bremsaktuators (33) umfasst, wobei mit einem Steuergerät (38) elektrische Signale (56) von dem Sensor (52) erfasst werden und in Abhängigkeit von den elektrischen Signalen (56) die Absaugvorrichtung (40), insbesondere ein Gebläse (42) der Absaugvorrichtung (40), angesteuert wird.

2. Verfahren (99) nach Anspruch 1, wobei
- der Bremsaktuator (33) zum Bewegen des Bremsbelags (32) relativ zur Bremsscheibe (18) oder zur Bremstrommel eingerichtet ist, eine Stellung einer Linearbewegung, insbesondere einen Hub (60), vorzugswese mit einem Bremskolben (34), oder eine Stellung einer Drehbewegung, insbesondere einen Drehwinkel, vorzugsweise mit einem Bremsschlüssel, zu variieren, wobei das elektrische Signal (56) die Stellung, insbesondere den Hub (60) oder den Drehwinkel (34), anzeigt, insbesondere indem eine elektrische Größe (57), vorzugsweise eine Spannung (58), als elektrisches Signal (56) in Abhängigkeit von der Stellung, insbesondere vom Hub (60) oder vom Drehwinkel, variiert, wobei vorzugsweise eine lineare Beziehung zwischen der Stellung, insbesondere dem Hub (60) oder dem Drehwinkel, und dem elektrischen Signal (56) besteht und/oder der Sensor (52) vorzugsweise ein Verschleißsensor (54) ist.

3. Verfahren (99) nach Anspruch 1 oder 2, wobei der zeitliche Verlauf (70) des elektrischen Signals (56) überwacht und eine Betätigung der Bremsanordnung (16) erfasst wird, wenn im zeitlichen Verlauf (70) eine Steigung (92, 96) erfasst wird, deren Betrag oberhalb des Betrags mindestens eines vordefinierten Schwellenwerts (94, 98) liegt.

4. Verfahren (99) nach einem der vorhergehenden Ansprüche, wobei ein positiver Schwellenwert (94) und ein negativer Schwellenwert (98) vordefiniert sind und eine positive Steigung (92) oberhalb des positiven Schwellenwerts (94) als Betätigungsbewegung (80) der Bremsanordnung (16) und eine negative Steigung (96) unterhalb des negativen Schwellenwerts (98) als Lösebewegung (88) der Bremsanordnung (16) oder eine positive Steigung (92) oberhalb des positiven Schwellenwerts (94) als Lösebewegung (88) und eine negative Steigung (96) unterhalb des negativen Schwellenwerts (98) als Betätigungsbewegung (80) der Bremsanordnung (16) erfasst wird.

5. Verfahren (99) nach einem der vorhergehenden Ansprüche, wobei die Absaugvorrichtung (40), insbesondere das Gebläse (42) der Absaugvorrichtung (40), während oder nach dem Erkennen einer Betätigungsbewegung (80) aktiviert und während oder nach dem Erkennen einer Lösebewegung (88) deaktiviert wird.

6. Verfahren (99) nach einem der vorhergehenden Ansprüche, wobei eine aktive Bremsung (82) als ein zeitlicher Bereich (81) im zeitlichen Verlauf (70) erkannt wird, der zwischen einer erkannten Betätigungsbewegung (80) und einer erkannten Lösebewegung (88) liegt und vorzugsweise das elektrische Signal (56) während einer aktiven Bremsung (82) einen im Wesentlichen konstanten Wert oder einen Verlauf mit einer Steigung aufweist, deren Betrag unter dem Betrag des oder der Schwellenwerte (94, 98) liegt.

7. Verfahren (99) nach einem der vorhergehenden Ansprüche, wobei mit dem Steuergerät (38) eine Differenz (84) der Werte des elektrischen Signals (56) im zeitlichen Verlauf (70) vor und nach einer erkannten Betätigungsbewegung (80) und/oder eine Änderung des Werts des elektrischen Signals (56) nach einer erkannten Betätigungsbewegung (80), insbesondere bis zu einer danach erkannten Lösebewegung (88), erfasst und eine Dauer und/oder Leistung der Absaugvorrichtung (40), insbesondere des Gebläses (42) in Abhängigkeit von der Differenz (84) und/oder der Änderung bestimmt wird.

8. Verfahren (99) nach einem der vorhergehenden Ansprüche, wobei ein Geschwindigkeitsindikator (63) vor, während oder unmittelbar nach der erfassten Betätigungsbewegung (80) bestimmt und in Abhängigkeit vom Geschwindigkeitsindikator (63) zwischen einem statischen Bremsen (111) und einem dynamischen Bremsen (115) unterschieden wird und nach der erkannten Betätigungsbewegung (80) die Absaugvorrichtung (40) nur beim erkannten dynamischen Bremsen (115) aktiviert wird und beim statischen Bremsen (111) deaktiviert bleibt.

9. Verfahren (99) nach einem der vorhergehenden Ansprüche, wobei der Geschwindigkeitsindikator (63, 69) von einem Raddrehzahlsensor (62) oder einem Bremssteuergerät (66) durch das Steuergerät (38) empfangen wird.

10. Verfahren (99) nach einem der vorhergehenden Ansprüche, wobei das Steuergerät (38) die Anzahl der Betätigungsbewegungen (80) und Lösebewegung (88), insbesondere mit der durch das elektrische Signal (56) erfassten Differenz (84) im zeitlichen Verlauf (70), oder einen Umgebungsparameter der Bremsanordnung (16) erfasst und die Absaugvorrichtung (40), insbesondere das Gebläse (42) zusätzlich in Abhängigkeit von der Anzahl oder dem Umgebungsparameter gesteuert und/oder geregelt wird.

11. Steuergerät (38) für ein Bremsstaubabsaugungssystem (10) mit einer Absaugvorrichtung (40) zum Absaugen von Bremsstaub (36), wobei das Steuergerät (38) eingerichtet ist, ein Verfahren (99) nach einem der Ansprüche 1 bis 10 aufzuführen.

12. Steuergerät (38) nach Anspruch 11, wobei das Steuergerät (38) im Bereich des Rades (12) oder einer Bremsanordnung (16) eines Fahrzeugs (14) anordenbar ist oder als eine zentrale Steuerung, insbesondere als Bestandteil eines Bremssteuergeräts (66), ausgebildet ist.

13. Bremsstaubabsaugungssystem (10) zur Absaugung von Bremsstaub (36) einer Bremsanordnung (16), wobei das Bremsstaubabsaugungssystem (10) eingerichtet ist, das Verfahren (99) nach einem der Ansprüche 1 bis 10 auszuführen und/oder ein Steuergerät (38) nach Anspruch 11 oder 12 umfasst.

14. Bremsstaubabsaugungssystem (10) nach Anspruch 13, wobei das Bremsstaubabsaugungssystem (10) ein Steuergerät (38) aufweist, das mit einem Sensor (52), insbesondere einem Verschleißsensor (54) verbindbar ist, um elektrische Signale (56) des Sensors (52) zu empfangen und eine Absaugvorrichtung (40), insbesondere ein Gebläse (42) der Absaugvorrichtung (40), des Bremsstaubabsaugungssystems (10) in Abhängigkeit von dem elektrischen Signal (56) zu steuern und/oder zu regeln.

15. Fahrzeug (14) mit einem Bremsstaubabsaugungssystem (10) nach Anspruch 13 oder 14.
